# EUROPÄISCHE PATENTANMELDUNG

(11) **EP 0 900 697 A2**
(43) Veröffentlichungstag der Anmeldung: **10.03.1999**
(21) Anmeldenummer: 98114955.2
(22) Anmeldetag: 08.08.1998
(51) Int. Cl.: B60R 7/04

(54) **Haltekonsole und Aufnahmegehäuse für Komforteinheiten in einem Fahrzeuginnenraum**

(30) Priorität: 06.09.1997 DE 19739134
(71) Anmelder: MC Micro Compact Car Aktiengesellschaft, 2500 Biel 4 (CH)
(72) Erfinder: Fischer, Jan, 72072 Tübingen (DE); Gerneth, Christian, 72622 Nürtingen (DE); Rath, Jan, 71272 Malmsheim (DE)

(57) **Zusammenfassung**

Aus dem Stand der Technik ist es bekannt, Musikkassetten in einem Gehäuse im Bereich eines Fahrzeugmitteltunnels zu positionieren.

Erfindungsgemäß ist eine fahrzeugfest montierbare, einstückige und eigensteife Trägerblende vorgesehen, die ein Befestigungsprofil aufweist, das wenigstens drei in einer Reihe zueinander benachbarte, identische Zentrierköpfe aufweist, und jede Komforteinheit ist mit einem Träger versehen, der mit einer auf den Zentrierkopf abgestimmten Zentrierpfanne sowie mit einem die Zentrierpfanne an dem Zentrierkopf lösbar festlegenden Befestigungselement versehen ist, und dem Zentrierkopf und der Zentrierpfanne sind Stützmittel zur Abstützung des Trägers zugeordnet.

Einsatz für ein Cockpit eines Personenkraftwagens.

## Beschreibung

Die Erfindung betrifft eine Haltekonsole für Komforteinheiten in einem Fahrzeuginnnenraum, wobei wenigstens eine Komforteinheit zur Aufbewahrung von Tonträgern gestaltet ist sowie ein Aufnahmegehäuse zur Anordnung in einem Fahrzeuginnenraum für Komforteinheiten insbesondere zur Aufbewahrung von Tonträgern.

Eine solche Haltekonsole sowie ein solches Aufnahmegehäuse für Tonträger, insbesondere Musikkassetten, sind für einen Fahrzeuginnenraum eines Personenkraftwagens allgemein bekannt (BMW 3er-Reihe). Die bekannte Haltekonsole ist an einem Mitteltunnel des Fahrzeuginnenraumes festgelegt. Auf der Haltekonsole ist ein Aufnahmegehäuse für mehrere Musikkassetten befestigt, wobei für die Aufbewahrung jeweils einer Musikkassette jeweils ein Funktionseinsatz in dem Aufnahmegehäuse gelagert ist. Die Funktionseinsätze sind in ihrer Ruheposition in dem Aufnahmegehäuse versenkt und können durch Federkraft linear nach oben ausgefahren werden, um Zugang zu der jeweiligen Musikkassette zu erhalten. Das Aufnahmegehäuse ist fest mit der Haltekonsole verbunden, so daß ein Austausch nur mit großem Aufwand möglich ist.

Aus der DE 295 15 033 U1 ist ein Magazin für Tonträger bekannt, das an einer Mittelkonsole eines Kraftzeuginnenraumes festlegbar ist. Die Tonträger des Magazins sind innerhalb eines auswechselbaren Gehäuseeinsatzes gehalten und durch Audrückkörper belastet, die an elastisch nachgiebigen Wandbereichen des Gehäuseeinsatzes angeordnet sind. Die Andrückkörper rasten bei eingeschobenem Tonträger in entsprechende Antriebsöffnungen der Tonträger ein.

Die DE 42 37 368 A1 offenbart einen Behälter für Tonträger, der ebenfalls in einem Kraftfahrzeug montierbar ist. Der Behälter weist einen Befestigungssockel auf, der an seinen beiden Seitenflächen jeweils mit einer Halteleiste versehen ist, die in Führungen des Behältergehäuses eingreifen, die die Halteleisten übergreifen. Am Befestigungssockel sind weitere Führungsflächen angeordnet, wobei eine Führungsfläche durch einen brückartigen, mit Zähnen versehenen Steg gebildet ist, der federnd gegen eine am Behältergehäuse angeordnete Zahnleiste drückt.

Es ist auch bekannt (DE 44 41 265 A1), eine Haltevorrichtung für Trinkbehältnisse vorzusehen, die in einer Mittelkonsole einer Fahrzeuginstrumententafel integriert ist. Die Haltevorrichtung weist ein in der Mittelkonsole integriertes Gehäuse auf, in der eine aus dem Gehäuse herausfahrbare Lade gelagert ist. Die Lade dient zur Aufnahme von zwei Getränkebehältnissen. An der herausfahrbaren Lade sind verschwenkbare Seitenarme angebracht, die auf die Gehäusebreite einschwenkbar sind, um ein Einschieben der Lade zu ermöglichen.

Aufgabe der Erfindung ist es, eine Haltekonsole und ein Aufnahmegehäuse der eingangs genannten Art zu schaffen, die einen variablen Einsatz unterschiedlicher Komforteinheiten ermöglichen. Für die Haltekonsole wird diese Aufgabe dadurch gelöst, daß eine fahrzeugfest montierbare, einstückige und eigensteife Trägerblende vorgesehen ist, die ein Befestigungsprofil aufweist, daß wenigstens drei in einer Reihe zueinander benachbarte, identische Zentrierköpfe aufweist, und daß jede Komforteinheit mit einem Träger versehen ist, der mit einer auf den Zentrierkopf abgestimmten Zentrierpfanne sowie mit einem die Zentrierpfanne an dem Zentrierkopf lösbar festlegenden Befestigungselement versehen ist, und daß dem Zentrierkopf und der Zentrierpfanne Stützmittel zur Abstützung des Trägers zugeordnet sind. Dadurch ist es möglich, mehrere Komforteinheiten zueinander benachbart am Befestigungsprofil festzulegen. Durch die lösbare Anordnung der Komforteinheiten ist ein einfacher Austausch dieser Komforteinheiten gegeben. Dadurch, daß die Komforteinheiten über den jeweiligen Träger an lediglich einem einzelnen Befestigungspunkt mittels des Befestigungselementes, insbesondere einer Rast- oder Schraubverbindung, festgelegt sind, wird die einfache Befestigung und der einfache Austausch weiter verbessert. Die Stützmittel gewährleisten, daß die Befestigungsstelle im Bereich des Zentrierkopfes und der Zentrierpfanne insbesondere bei einer frei abragenden Anordnung des Trägers durch das Eigengewicht der Komforteinheit nicht überbelastet wird. Die Stützmittel übernehmen die Abstützung des Trägers und damit der Komforteinheit am Befestigungsprofil und gewährleisten somit eine statisch bestimmte Anordnung der Komforteinheit am Befestigungsprofil.

In Ausgestaltung der Erfindung ist die Trägerblende in einem Cockpitbereich des Fahrzeuginnenraumes derart angeordnet, daß das Befestigungsprofil im wesentlichen vertikal ausgerichtet ist. Dies ist eine besonders vorteilhafte Anordnung der Trägerblende, da die Komforteinheiten insbesondere in einem mittleren Abschnitt des Cockpitbereiches sowohl für einen Fahrer als auch für einen Beifahrer des Kraftfahrzeuges gut zugänglich ist.

In weiterer Ausgestaltung der Erfindung ist als Stützmittel neben dem Zentrierkopf ein achsparallel zu dem Zentrierkopf ausgerichteter Stütztrichter in der Trägerblende integriert, und der Träger ist mit einem in dem Stütztrichter zentrierbaren Stützzapfen versehen. Zusätzlich zur Stützung des Trägers und damit der Komforteinheit dient die Kombination aus Stützzapfen und Stütztrichter zudem als Verdrehsicherung, die gewährleistet, daß die Komforteinheit in ihrer jeweiligen Einbauposition sicher gehalten wird.

In weiterer Ausgestaltung der Erfindung ist ein mit verschiedenen Einsatzelementen ausstattbarer Aufnahmering mit dem Träger einstückig verbunden. Die Komforteinheiten stellen insbesondere einen Becherhalter oder einen Müllbeutel dar. Die Austauschbarkeit der Einsatzelemente ermöglicht eine variable Einsetzbarkeit des Aufnahmeringes für unterschiedliche Komforteinheiten.

In weiterer Ausgestaltung der Erfindung ist der Träger Teil eines Aufnahmegehäuses für verschiedene Komforteinheiten, wobei die Komforteinheiten in Einsatzrahmen des Aufnahmegehäuses lösbar einsetzbare Gehäuseeinsätze aufweisen. Das Aufnahmegehäuse ist derart gestaltet, daß es neben dem Träger auch den Stützzapfen aufweist, und mit einem seitlichen Randbereich flächig an einer korrespondierenden Wandung des Befestigungsprofiles anliegt, so daß eine sichere Positionierung des Aufnahmegehäuses am Befestigungsprofil der Trägerblende gewährleistet ist. Durch das Vorsehen von Einsatzrahmen in dem Aufnahmegehäuse, in die unterschiedliche Gehäuseeinsätze lösbar einsetzbar sind, ist das Aufnahmegehäuse in einfacher Weise für unterschiedliche Komforteinheiten einsetzbar. Besonders vorteilhaft ist das Aufnahmegehäuse für Komforteinheiten in Form von Compactdisc- oder Musikkassetten-Ablagen oder als Aschenbecher einsetzbar.

In weiterer Ausgestaltung der Erfindung sind die Einsatzrahmen parallel zueinander in dem Aufnahmegehäuse angeordnet und um eine gemeinsame Schwenkachse unabhängig voneinander schwenkbeweglich. Dadurch sind die Einsatzrahmen mit geringem Lageraufwand zwischen einer im Aufnahmegehäuse versenkten Ruheposition und einer aus dem Aufnahmegehäuse herausragenden Funktionsposition beweglich.

In weiterer Ausgestaltung der Erfindung weisen wenigstens zwei zueinander benachbarte Einsatzrahmen identisch gestaltete Einsatzöffnungen auf, und wenigstens ein Gehäuseeinsatz ist mit einer sich über die wenigstens zwei Einsatzrahmen erstreckenden Tiefe versehen. Dadurch ist die Tiefe des jeweiligen Gehäuseeinsatzes nicht auf die maximale Tiefe jeweils eines einzelnen Einsatzrahmens begrenzt, so daß die Variabilität der Gehäuseeinsätze weiter verbessert ist. Diese Ausgestaltung ist insbesondere für einen Gehäuseeinsatz in Form eines Aschenbechers geeignet, da die größere Tiefe des Gehäuseeinsatzes einen ausreichenden Raum für Abfälle, Zigarettenkippen und Asche bereitstellt.

Für das Aufnahmegehäuse wird die eingangs gestellte Aufgabe dadurch gelöst, daß mehrere parallel zueinander angeordnete Einsatzrahmen vorgesehen sind, die zwischen einer im Aufnahmegehäuse versenkten Ruheposition und einer aus dem Aufnahmegehäuse herausragenden Funktionsposition im Aufnahmegehäuse beweglich gelagert sind, und die Einsatzöffnungen für die lösbare Aufnahme von Gehäuseeinsätzen der Komforteinheiten aufweisen. Das Vorsehen von beweglichen Einsatzrahmen, in die unterschiedliche Gehäuseeinsätze entsprechender Komforteinheiten einsetzbar sind, ermöglicht eine große Variabilität unterschiedlicher Komforteinheiten. Die lösbare Aufnahme der Gehäuseeinsätze in den Einsatzrahmen gewährleistet eine schnelle und einfache Austauschbarkeit der Komforteinheiten.

In weiterer Ausgestaltung der Erfindung sind die Gehäuseeinsätze derart auf die Einsatzöffnungen der Einsatzrahmen abgestimmt, daß sie kraftschlüssig in die Einsatzrahmen einsetzbar sind. Die Notwendigkeit ergänzender Befestigungselemente zur Halterung der Gehäuseeinsätze in dem Einsatzrahmen entfällt durch diese Ausgestaltung.

In weiterer Ausgestaltung der Erfindung sind die Einsatzrahmen kreisförmig gestaltet und weisen in Umfangsrichtung versetzte Rastprofilierungen für ein in Umfangsrichtung variables Einsetzen der korrespondierend profilierten Gehäuseeinsätze auf.

In weiterer Ausgestaltung der Erfindung sind die Gehäuseeinsätze an ihrem Außenumfang mit Griffelementen versehen. Durch das Versetzen der Gehäuseeinsätze zueinander in Umfangsrichtung innerhalb der jeweiligen Einsatzrahmen können die Griffelemente derart relativ zum Außenumfang des Aufnahmegehäuses versetzt angeordnet werden, daß entweder ein einfaches Ergreifen jeweils eines einzelnen Griffelementes oder aber das gemeinsame Ergreifen mehrerer Griffelemente ermöglicht wird. Somit kann entweder ein einzelnes oder ein gemeinsames Verschwenken der Einsatzrahmen erfolgen.

In weiterer Ausgestaltung der Erfindung weist jeder Gehäuseeinsatz zur Halterung eines Ton- oder Informationsträgers wenigstens eine den Ton- oder Informationsträger im eingesetzten Zustand formschlüssig übergreifende Führungsnase auf. Als Tonträger sind insbesondere Compact-Discs oder Musikkassetten vorgesehen. Als Informationsträger dienen Magnet- oder Chipkarten. Die wenigstens eine Führungsnase verhindert insbesondere im Crashfall zuverlässig, daß der jeweilige Ton- oder Informationsträger aus seinem Gehäuseeinsatz herausgeschleudert wird.

In weiterer Ausgestaltung ist die wenigstens eine Führungsnase Teil eines in einem Seitenrand des Gehäuseeinsatzes vorgesehenen Aufnahmeschlitzes, in den ein Randabschnitt des Ton- oder Informationsträgers hineinragt. Dadurch wird eine weiter verbesserte formschlüssige Aufnahme des jeweiligen Ton- oder Informationsträgers erzielt.

In weiterer Ausgestaltung weist jeder Gehäuseeinsatz in einem der wenigstens einen Führungsnase gegenüberliegenden Randbereich wenigstens ein den Ton- oder Informationsträger unter die Führungsnase drückendes Federelement auf. Dadurch wird eine weiter verbesserte Sicherung des jeweiligen Ton- oder Informationsträgers in dem Gehäuseeinsatz erzielt.

Für das Aufnahmegehäuse wird die erfindungsgemäße Aufgabe auch dadurch gelöst, daß ein fahrzeugfest positionierbarer Trägerrahmen vorgesehen ist, in den eine Einsatzwanne lösbar einsetzbar ist, und an dem exzentrisch zur Einsatzwanne eine Schwenkachse für eine schwenkbewegliche Anordnung eines Einsatzrahmens positionierbar ist, der zur Aufnahme eines Komforteinsatzes vorgesehen ist. Diese Variante ist insbesondere für Komforteinheiten in Form von Getränkehaltern geeignet, da die Einsatzwanne insbesondere zur Aufnahme eines Getränkebechers und der Einsatzrahmen für die Aufnahme eines weiteren Getränkebechers, einer Getränkedose oder einer Getränkeflasche geeignet ist. Dadurch sind mittels eines Aufnahmegehäuses zwei Getränke positionierbar. Die schwenkbare Anordnung gewährleistet gleichzeitig in der unbenutzten Ruheposition eine platzsparende Ausrichtung des Einsatzrahmens.

In Ausgestaltung der Erfindung ist an dem Trägerrahmen ein Träger zur Festlegung des Trägerrahmens an der Haltekonsole vorgesehen. Dadurch kann der Trägerrahmen in einfacher Weise direkt an dem Befestigungsprofil der Trägerblende festgelegt werden.

In weiterer Ausgestaltung der Erfindung ist die Schwenkachse auf der dem Träger gegenüberliegenden Seite des Trägerrahmens angeordnet. Dadurch wird gewährleistet, daß der Einsatzrahmen im ausgeschwenkten Zustand so weit von der Haltekonsole abragt, daß das Einsetzen einer Getränkeflasche in diesen Einsatzrahmen möglich ist, ohne daß darüberliegende Aufnahmegehäuse dies behindern.

Weitere Vorteile und Merkmale der Erfindung ergeben sich aus den Ansprüchen. Nachfolgend sind bevorzugte Ausführungsbeispiele der Erfindung beschrieben und anhand der Zeichnungen dargestellt.
- Fig. 1: zeigt in perspektivischer Darstellung die Anordnung einer Ausführungsform einer erfindungsgemäßen Haltekonsole in einem Mittelbereich eines Cockpits eines Personenkraftwagens,
- Fig. 2: in vergrößerter, perspektivischer Darstellung die Haltekonsole nach Fig. 1, an der ein Becherhalter und ein Aufnahmegehäuse für Komforteinheiten zur Halterung von Compactdiscs festgelegt sind,
- Fig. 3: eine weitere Darstellung eines Aufnahmegehäuses nach Fig. 2, wobei ein Einsatzrahmen in seine Funktionsposition nach außen geschwenkt ist,
- Fig. 4: die schalenförmige Gehäusestruktur des Aufnahmegehäuses nach Fig. 3 ohne Einsatzrahmen,
- Fig. 5: einen Schnitt durch das Aufnahmegehäuse nach Fig. 3, wobei eine Schnittdarstellung von unten her gewählt wurde,
- Fig. 6: in vergrößerter, perspektivischer Darstellung eine Schwenkachse des Aufnahmegehäuses zur Lagerung der Einsatzrahmen,
- Fig. 7: einen Einsatzrahmen für das Aufnahmegehäuse nach den Fig. 3 bis 5,
- Fig. 8: einen Gehäuseeinsatz für den Einsatzrahmen nach Fig. 7, der zur Aufnahme einer Compactdisc geeignet ist,
- Fig. 9: einen weiteren Gehäuseeinsatz für den Einsatzrahmen nach Fig. 7, der zur Aufnahme einer Musikkassette dient,
- Fig. 10,: einen weiteren Gehäuseeinsatz für den Einsatzrahmen nach Fig. 7, der einfache Ablagebereiche bildet,
- Fig. 11: einen weiteren Gehäuseeinsatz für den Einsatzrahmen nach Fig. 7, der als Aschenbecher gestaltet ist,
- Fig. 12: den Gehäuseeinsatz nach Fig. 11 in einer Explosionsdarstellung,
- Fig. 13: einen weiteren Gehäuseeinsatz ähnlich Fig. 9, der mit einer zusätzlichen Sicherung für eine Musikkassette versehen ist,
- Fig. 14: einen weiteren Gehäuseeinsatz ähnlich Fig. 8, der mit einer zusätzlichen Sicherung für die Compact-Disc versehen ist,
- Fig. 15: einen weiteren Gehäuseeinsatz ähnlich Fig. 10, der mit einer zusätzlichen Sicherung zur Halterung einer Magnet- oder Chipkarte versehen ist,
- Fig. 16: einen mit einem Träger zur Festlegung an der Haltekonsole versehenen Aufnahmering,
- Fig. 17: den Aufnahmering nach Fig. 16 mit einem eingelegten Becherhaltereinsatz,
- Fig. 18: einen Müllbeuteleinsatz für die Anordnung in dem Aufnahmering nach Fig. 16,
- Fig. 19: in perspektivischer Darstellung eine weitere Ausführungsform eines erfindungsgemäßen Aufnahmegehäuses, das an der Haltekonsole nach den Fig. 1 und 2 positionierbar ist,
- Fig. 20: eine weitere Ausführungsform des Aufnahmegehäuses nach Fig. 19 ähnlich Fig. 19,
- Fig. 21: einen Trägerrahmen des Aufnahmegehäuses nach Fig. 20 in geringfügig verkleinerter Darstellung, und
- Fig. 22: eine in den Trägerrahmen nach Fig. 21 einsetzbare Einsatzwanne des Aufnahmegehäuses nach Fig. 20.

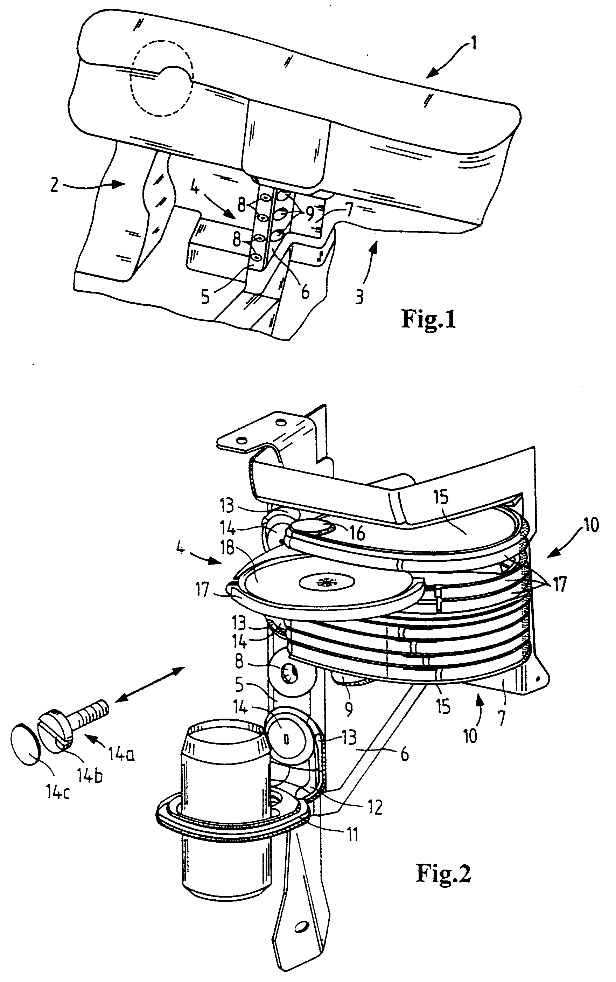

Ein Cockpit 1 nach Fig. 1 ist in einem Fahrzeuginnenraum eines Personenkraftwagens angeordnet und weist einen fahrerseitigen Cockpitabschnitt 2 sowie einen beifahrerseitigen Cockpitabschnitt 3 auf. In einem unteren Bereich eines mittleren Cockpitabschnittes ist eine nachfolgend näher beschriebene Haltekonsole 4 für die Anordnung verschiedener Komforteinheiten positioniert, wobei die Haltekonsole als einstückige, aus Kunststoff bestehende und eigensteif gestaltete Trägerblende ausgestaltet ist. Die Trägerblende 4 weist ein leistenförmiges Befestigungsprofil 5 auf, das sich in einer vertikalen Fahrzeuglängsebene erstreckt und in Fahrzeuglängsrichtung nach vorne geringfügig schrägverlaufend ansteigt. Eine - in Fahrtrichtung gesehen - rechte Seitenwange 6 der Trägerblende 4, die das Befestigungsprofil 5 seitlich flankiert, weist drei Stütztrichter 9 auf, die als in Fahrzeuglängsrichtung verlaufende, sich konisch verjüngende trichterförmige Vertiefungen gestaltet sind. Da die Seitenwange 6 nicht exakt in einer Fahrzeuglängsebene vom Befestigungsprofil 5 aus nach vorne verläuft, sondern vielmehr zur Fahrzeuglängsrichtung schräg nach rechts, d.h. zur Beifahrerseite hin, schräg zu einer Rückwand 7 hin erstreckt ist, sind die Stütztrichter 9 - von der Seitenwange 6 ansetzend - in einem spitzen Winkel zu der Außenfläche der Seitenwange 6 ausgerichtet.

Alle drei Stütztrichter 9 sind in gleichmäßigen Abschnitten übereinander in der Seitenwange 6 integriert. Zu einer nicht näher bezeichneten Stirnwand der Fahrgastzelle des Personenkraftwagens hin geht die Seitenwange 6 in die Rückwand 7 der Trägerblende 4 über, die sich parallel zum Befestigungsprofil 5 in Fahrzeugquerrichtung zur Beifahrerseite 3 nach rechts erstreckt.

Die Trägerblende 4 ist in nicht dargestellter Weise sowohl im Cockpitbereich als auch im Bereich eines Mitteltunnels der Fahrgastzelle fahrzeugfest fixiert. Das Befestigungprofil 5 weist vier in gleichmäßigen Abständen übereinander angeordnete Befestigungspunkte auf, die jeweils als kugelsegmentförmig gestaltete Zentrierköpfe 8 ausgeführt sind. Diese Zentrierköpfe 8 sind einstückig an der Trägerblende 4 ausgeformt. In jedem Zentrierkopf 8 ist zentral eine Befestigungsaufnahme vorgesehen, die nachfolgend näher beschrieben werden wird.

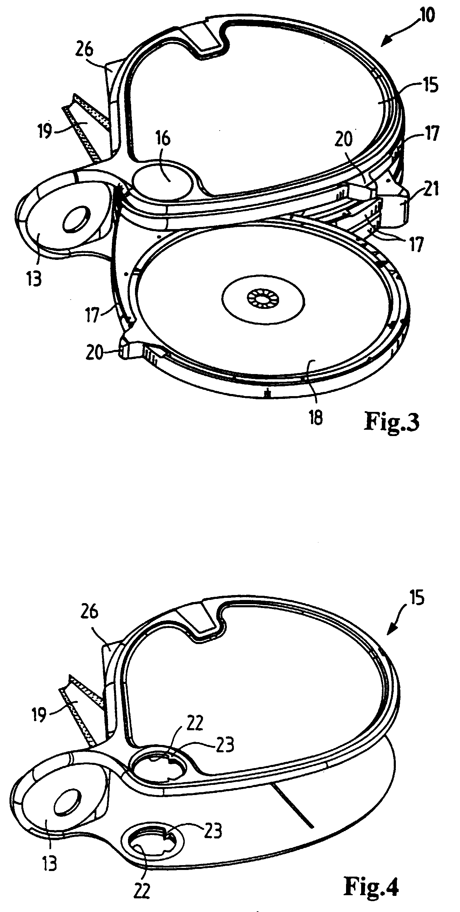

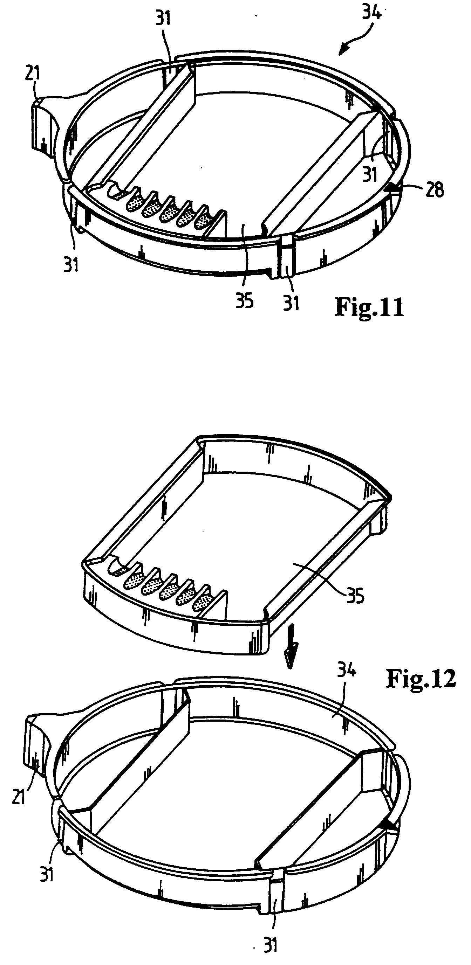

An der Trägerblende 4 sind gemäß Fig. 2 zwei Aufnahmegehäuse 10 für die Komforteinheiten übereinander angeordnet, wobei die beiden Aufnahmegehäuse jeweils identisch zueinander und gemäß der Darstellung nach den Fig. 3 bis 12 gestaltet sind. Jedes Aufnahmegehäuse 10 ist mittels eines nachfolgend näher beschriebenen Trägers 13 an jeweils einem Zentrierkopf 8 festgelegt, wobei das obere Aufnahmegehäuse am obersten Zentrierkopf 8 und das darunterliegende Aunahmegenäuse 10 an dem unmittelbar unter dem obersten Zentrierkopf 8 liegenden Zentrierkopf 8 festgelegt ist.

Jedes Aufnahmegehäuse 10 weist einen Stützzapfen 19 auf, der sich korrespondierend zu dem Stütztrichter 9 in Fahrzeuglängsrichtung zu seinem freien Ende hin verjüngt und parallel zu einer Befestigungachse der durch die Zentrierköpfe 8 gebildeten Befestigungspunkte ausgerichtet ist. Außerdem ist der an dem Aufnahmegehäuse 10 einstückig angeformte Träger 13 als Zentrierpfanne gestaltet, die korrespondierend zu dem Zentrierkopf 8 als kugelsegmentförmige Schale ausgeführt ist. Auch die Zentrierpfanne des Trägers 13 ist mit einem Durchbruch versehen, der im montierten Zustand des jeweiligen Aufnahmegehäuses 10 mit der korrespondierenden Befestigungsaufnahme des Zentrierkopfes 8 fluchtet. Mittels eines Befestigungselementes 14 (Fig. 2) wird die Zentrierpfanne des Trägers 13 an dem zugehörigen Zentrierkopf 8 festgelegt. Vorzugsweise ist das Befestigungselement 14 entweder als Rastverbindung oder als Schraubverbindung gestaltet. Wie aus Fig. 2 erkennbar ist, ist beim dargestellten Ausführungsbeispiel das Befestigungslement 14 als Schraube 14a gestaltet, wobei in der Trägerblende ein korrespondierendes Gewinde vorgesehen ist. Der Schraubenkopf ist mit einem Längsschlitz 14b versehen, der so dimensioniert ist, daß die Schraube 14a mittels einer Geldmünze ein- oder ausgeschraubt werden kann. Der Schraübenkopf ist durch eine schalenförmige Abdeckkappe 14c überdeckbar. Gleichzeitig mit dem Aufsetzen der Zentrierpfanne auf den Zentrierkopf 8 zentriert sich der Stützzapfen 19 in dem korrespondierenden Stütztrichter 9 in der Seitenwange 6, so daß eine sichere Positionierung des Aufnahmegehäuses 10 an der Trägerblende 4 erreicht wird. Ergänzend ist das Aufnabmegehäuse 10 seitlich noch mit Stützrippen 26 versehen, (Fig. 3 bis 5), die sich linienförmig an der Seitenwange 6 abstützen. Eine Rückseite des Aufnahmegehäuses 10 liegt zudem an der Rückwand 7 an, so daß eine äußerst stabile Aufnahme und Abstützung der beiden Aufnahmegehäuse 10 an der Trägerblende 4 geschaffen ist.

Im Bereich des als Befestigungspunkt dienenden untersten Zentrierkopfes 8 ist ein horizontal in den Fahrzeuginnenraum abragender Aufnahmering mittels eines Trägers 13 festlegt, der identisch zu den Trägern 13 der Aufnahmegehäuse 10 gestaltet ist. Auch der Träger 13 des Aufnahmeringes 13 ist einstückig mit dem Aufnahmering 13 verbunden und weist eine Zentrierpfanne auf, die sich auf dem Zentrierkopf 8 zentriert. Das Befestigungselement 14 dient zur Festlegung des Trägers 13 und damit des Aufnahmeringes 13 an der Trägerblende 4. Der Träger 13 geht mittels eines Stützwinkels 12 einstückig in den Aufnahmering 11 über, wobei der Stützwinkel 12 sich flächig an einer Vorderseite des Befestigungsprofiles 5 abstützt. Dieser Stützwinkel 12 nimmt Kräfte auf, die durch entsprechende Belastungen des Aufnahmeringes aufgrund des Eigengewichtes eines nachfolgend näher beschriebenen Müllbeutels oder eines Becherhalters auftreten, so daß auf dem Träger 13 selbst und damit auf die Zentrierpfanne keine derartigen Kräfte übertragen werden. Der Stützwinkel 12 dient somit als Stützmittel für den Träger 13 des Aufnahmeringes 11.

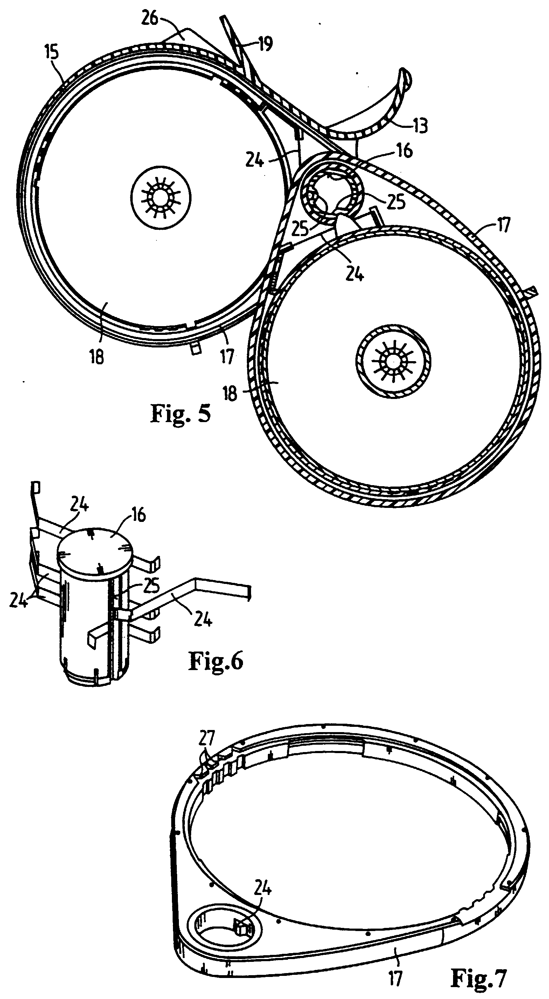

Nachfolgend wird eines der beiden Aufnahmegehäuse 10 näher beschrieben, die in der Darstellung nach Fig. 2 mit jeweils vier ringförmigen Einsatzrahmen 17 versehen sind. Jeder der vier Einsatzrahmen 17 ist gemäß Fig. 3 in einer Gehäuseschale 15 des Aufnahmegehäuses 10 schwenkbeweglich gelagert. Die Gehäuseschale 15 weist eine obere und eine untere Deckfläche auf, zwischen denen die Einsatzrahmen 17 angeordnet sind. Die beiden Deckflächen sind durch eine Seitenwand miteinander verbunden, an der die beiden Stützrippen 26 sowie der Stützzapfen 19 angeformt sind. Die Gehäuseschale 15 ist aus Kunststoff hergestellt. Auch die Einsatzrahmen 17 bestehen aus Kunststoff. In einem zu der Zentrierpfanne des Trägers 13 benachbarten Bereich der Gehäuseschale 15 sind in der oberen und in der unteren Deckfläche zwei koaxial zu einer vertikalen Mittelachse verlaufende und miteinander fluchtende, kreisförmige Durchbrüche 22 vorgesehen, die zur Aufnahme einer die Schwenkachse für die Einsatzrahmen 17 definierenden Schwenkhülse 16 vorgesehen sind. In jedem Durchbruch 22 sind zwei zueinander in Umfangsrichtung beabstandete, bei dem dargestellten Ausführungsbeispiel um ungefähr 90° versetzte, keilförmige Führungsnasen 23 vorgesehen, die in korrespondierende Längsnuten 25 der Schwenkhülse 16 eingreifen und diese verdrehsicher im Aufnahmegehäuse 10 halten. Auch die beiden als Raststellen dienenden Längsnuten 25 in der Schwenkhülse 16 sind in Umfangsrichtung um den gleichen Winkelbetrag zueinander versetzt. Jeder Einsatzrahmen 17 ist ringförmig gestaltet und weist gemäß Fig. 7 eine kreisförmige Einsatzöffnung auf, in die nachfolgend näher beschriebene Gehäuseeinsätze 18 einsetzbar sind. Jeder Einsatzrahmen 17 weist im Bereich der Schwenkachse und damit der Schwenkhülse 16 ein einstückig angeformtes Auge auf, das die Schwenkhülse 16 koaxial umschließt. Der Augenrand ist mit einer Öffnung für den Durchtritt einer Federnase 24 versehen, die aus einem Federblech gestaltet und in entsprechenden einstückig am Einsatzrahmen 17 angeformten Halterungen festgelegt ist (siehe insbesondere Fig. 5 und 6). Die Federschenkel der Federnase 24 sind derart in den Halterungen eingespannt, daß die Federnase radial - auf die Schwenkachse bezogen - elastisch nachgiebig ist und somit ein Ein- oder Ausrasten in die Längsnut 25 oder aus der jeweiligen Längsnut 25 ermöglicht. Die Längsnuten 25 sind derart relativ zum Aufnahmegehäuse 10 angeordnet, daß die eine Längsnut die im Aufnahmegehäuse 10 versenkte Ruheposition der Einsatzrahmen 17 und die andere Längsnut 25 die nach außen herausgeschwenkte Funktionsposition der Einsatzrahmen 17 definieren (Fig. 5 und 6).

Die Einsatzöffnung jedes Einsatzrahmens 17 weist auf ihrem Innenumfang gegenüberliegend vier in gleichmäßigen Abständen in Umfangsrichtung zueinander versetzte Rastnuten auf, in die korrespondierende, nicht näher dargestellte Raststege am Außenumfang von nachfolgend näher beschriebenen Gehäuseeinsätzen 18, 30, 32, 34 eingreifen. Diese Gehäuseeinsätze 18, 30, 32, 34 weisen einen umlaufenden, kreisförmigen Rand auf, wobei sie im wesentlichen teller- oder scheibenförmig gestaltet sind. Die Ränder der Gehäuseeinsätze 18, 30, 32, 34 sind jeweils mit einem umlaufenden, horizontal nach außen ragenden Auflagesteg versehen, mittels dessen sich der jeweilige Gehäuseeinsatz 18, 30, 32, 34 von oben her auf einem korrespondierenden Ringabsatz des Einsatzrahmens 17 abstützt. Jeder Gehäuseeinsatz 18, 30, 32, 34 ist daher von oben her in den Einsatzrahmen 17 nach Fig. 7 einsetzbar, bis der Auflagerand auf dem entsprechenden Ringabsatz des Einsatzrahmens 17 zur Auflage gelangt. Der Gehäuseeinsatz wird so kraftschlüssig in dem Einsatzrahmen 17 gehalten. In Umfangsrichtung ist der Gehäuseeinsatz im Einsatzrahmen 17 durch die Rastnuten und korrespondierenden Raststege verdrehgesichert. Eine Codierung 27 am Einsatzrahmen 17 sowie ein korrespondierender Positionierpfeil 28 am jeweiligen Gehäuseeinsatz 18, 30, 32, 34 ermöglicht zudem die Erkennung der Ausrichtung des jeweiligen Gehäuseeinsatzes in Umfangsrichtung.

Dem Positionierpfeil exakt gegenüberliegend ist am Rand jedes Gehäuseeinsatzes 18, 30, 32, 34 ein nach außen abragendes Griffelement 20, 21 vorgesehen, wobei die Griffelemente 20 und 21 gleiche Außenkonturen aufweisen. Durch die Lage des Positionierpfeiles 28 des jeweiligen Gehäuseeinsatzes relativ zu der Codierung 27 des zugehörigen Einsatzrahmens 17 können die Griffelemente 20 und 21 alternativ einander überdeckend oder versetzt zueinander angeordnet werden. Die Ränder der Gehäuseeinsätze 18, 30, 32, 34 sind ergänzend mit Klemmfedern 29, 31 versehen, die sich am Innenrand des zugehörigen Einsatzrahmens 17 im eingesetzten Zustand verklemmen. Dadurch wird eine zusätzliche kraftschlüssige Sicherung der Gehäuseeinsätze 18, 30, 32, 34 in den jeweiligen Einsatzrahmen 17 erzielt.

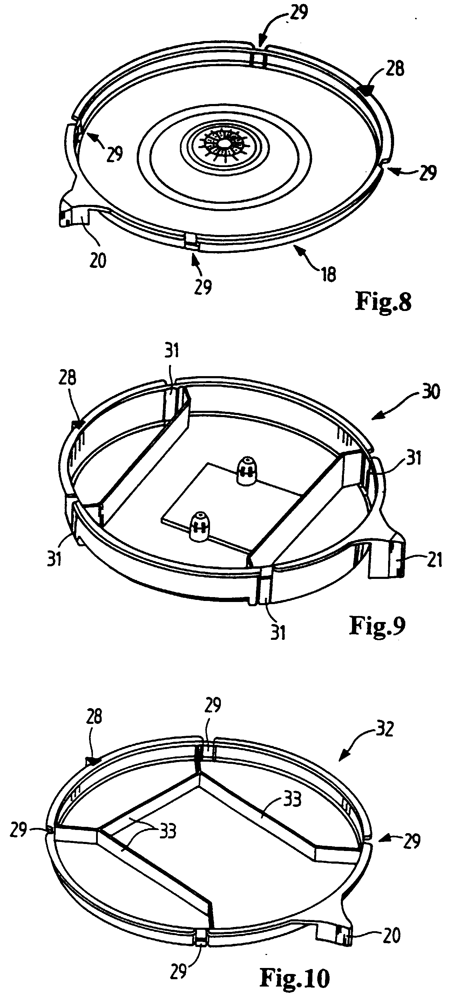

Wie anhand der Fig. 8 bis 12 erkennbar ist, weisen die Gehäuseeinsätze 30 und 34 die doppelte Tiefe auf wie die Gehäuseeinsätze 18 und 32. Die Gehäuseeinsätze 18 und 32 sind somit in jeweils einem einzelnen Einsatzrahmen 17 einsetzbar. Die Gehäuseeinsätze 30 und 34 hingegen sind in zwei exakt übereinander positionierten Einsatzrahmen 17 einsetzbar, so daß die beiden übereinanderliegenden Einsatzrahmen 17 durch den jeweiligen Gehäuseeinsatz 30, 34 miteinander zu einer Einheit verbunden sind.

Der Gehäuseeinsatz 18 ist zur Aufnahme einer Compactdisc geeignet und entsprechend ausgestaltet. Der Gehäuseeinsatz 32 dient zur Aufnahme flacher Gegenstände und ist durch auf seinem Boden verlaufende Trennstege 33 in verschiedene Teilabschnitte unterteilt. Der Gehäuseeinsatz 30 dient zur Aufnahme einer Musikkassette. Der Gehäuseeinsatz 34 ist als Aschenbecher gestaltet, wobei der Aschenbecher 34 gemäß Fig. 12 einen lösbaren und damit ausleerbaren Aschereinsatz 35 aufweist.

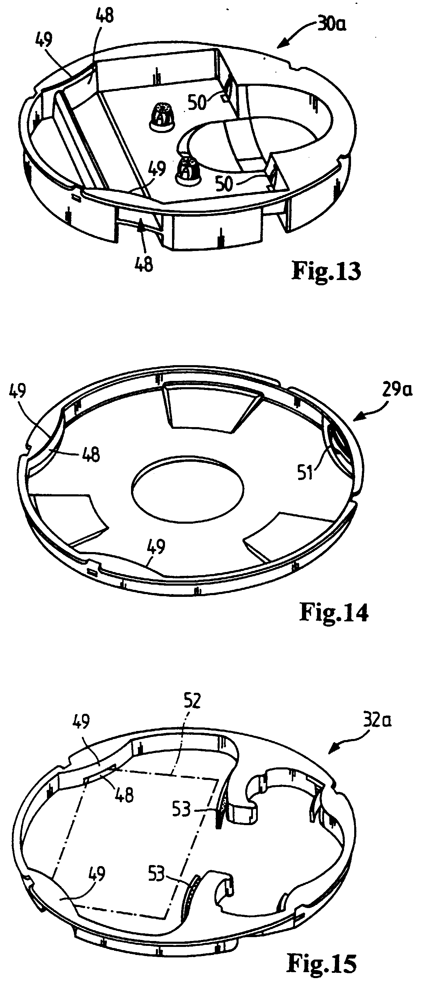

Die Gehäuseeinsätze nach den Fig. 13 bis 15 entsprechen im wesentlichen den zuvor beschriebenen Gehäuseeinsätzen nach den Fig. 8 bis 10. Wesentlicher Unterschied bei diesen Gehäuseeinsätzen ist es, daß auf zwei einander nahezu gegenüberliegenden Seiten im Seitenrand des jeweiligen Gehäuseeinsatzes 30a, 29a, 32a jeweils eine schlitzförmige Aufnahmeöffnung 48 vorgesehen ist, in die entsprechende Rand- oder Eckbereiche des jeweiligen Ton- oder Informationsträgers einführbar sind. Oberhalb jeder Aufnahmeöffnung 48 ist jeweils eine kreisbogenartig gestaltete Führungsnase 49 im Seitenrand des jeweiligen Gehäuseeinsatzes 30a, 29a, 32a integriert, die den jeweiligen Ton- oder Informationsträger im eingesetzten Zustand oben übergreift. Dabei dienen die beiden Aufnahmeöffnungen 48 beim Gehäuseeinsatz 30a zur Aufnahme von Eckbereichen einer Musikkassette. Beim Gehäuseeinsatz 29a werden entsprechende Seitenrandbereiche einer CompactDisc eingeführt. Beim Gehäuseeinsatz 32a wird eine Magnet- oder Chipkarte in Form einer Scheckkarte, einer Telefonkarte oder ähnliches, die in gestrichelter Darstellung mit dem Bezugszeichen 52 versehen ist, eingeführt. Um eine sichere Positionierung der jeweiligen Eck- oder Randbereiche der Informations- oder Tonträger in den jeweiligen Aufnahmeöffnungen 48 und damit ein sicheres Übergreifen durch die Führungsnasen 49 zu erzielen, sind auf gegenüberliegenden Seiten in den Randbereichen des Gehäuseeinsatzes 30a, 29a, 32a, Federelemente 50, 51, 53 vorgesehen, die elastisch nachgiebig gestaltet sind und eine Druckkraft auf den jeweiligen Ton- oder Informationsträger in Richtung der Aufnahmeöffnungen 48 ausüben. Beim Gehäuseeinsatz 30a sind auf zwei gegenüberliegenden, jedoch miteinander fluchtenden Seiten zwei laschenartige Federelemente 50 vorgesehen. Beim Gehäuseeinsatz 29a ist ein einzelnes, bogenförmig gegenüberliegendes Federelement 51 den Aufnahmeöffnungen 48 mittig gegenüberliegend vorgesehen. Alle Federelemente sind vorzugsweise einstückig in dem jeweiligen, aus Kunststoff hergestellten Gehäuseeinsatz 30a, 29a, 32a ausgeformt. Beim Gehäuseeinsatz 32a sind zwei blattfederförmig gestaltete Federelemente 53 vorgesehen, die laschenartig aufeinander zugerichtet nach innen abragen.

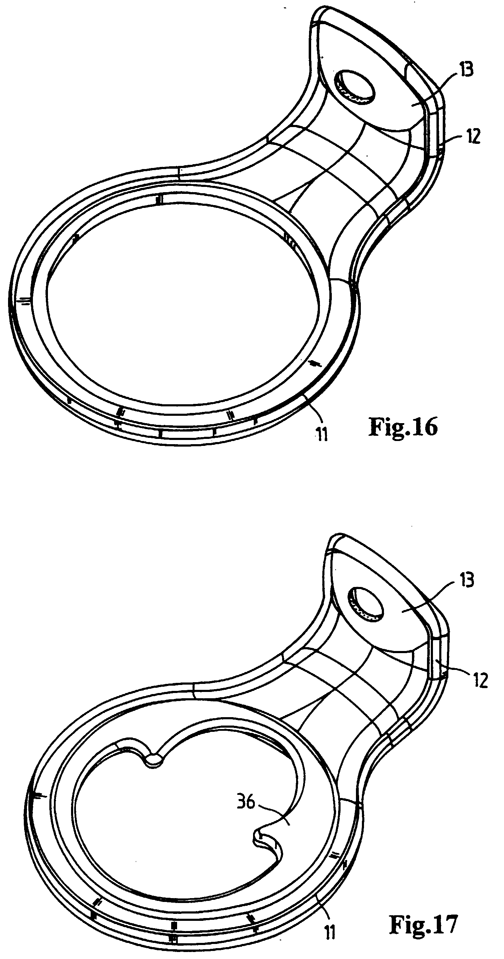

Der zuvor anhand der Fig. 2 bereits beschriebene Aufnahmering 11 weist gemäß den Fig. 16 bis 18 eine kreisförmige Öffnung auf, die mit einem umlaufenden Auflagerand versehen ist. In diesen Auflagerand ist ein Bechereinsatz 36 einsetzbar, der aus einem elastisch nachgiebigen Material gestaltet ist und zwei keilartige Klemmlippen aufweist, die einen entsprechenden Trinkbecher oder eine Dose in der Öffnung des Aufnahmeringes 11 festlegen. Der Bechereinsatz 36 kann in einfacher Weise entfernt und durch einen Müllbeuteleinsatz 37, 38 ersetzt werden. Der Müllbeutel 37, 38 weist einen stabilen Trägerring 37 auf, an dem ein entsprechender Müllbeutel fixiert ist. Die Abmessungen des Trägerringes 37 sind auf die Abmessung eines Auflagerandes des Aufnahmeringes 11 abgestimmt, so daß der Trägerring 37 in einfacher Weise in den Aufnahmering 11 eingelegt werden kann und sich auf dem Auflagerand abstützt. Der Müllbeutel ragt durch den Aufnahmering 11 hindurch und nach unten ab. Ergänzend ist der Trägerring 37 mit einem Deckel 38 versehen, der einen Verschluß des Müllbeutels ermöglicht. Beim dargestellten Ausführungsbeispiel ist der Deckel 38 mit sternförmigen Schlitzen versehen, die es ermöglichen, Abfall durch den Deckel 38 hindurch in den Müllbeutel zu drücken. Die durch die sternförmigen Schlitze gebildeten Laschen verhindern, daß der Abfall im rauhen Fahrbetrieb oder bei einem Fahrzeugaufprall wieder aus dem Müllbeutel herausgeschleudert wird.

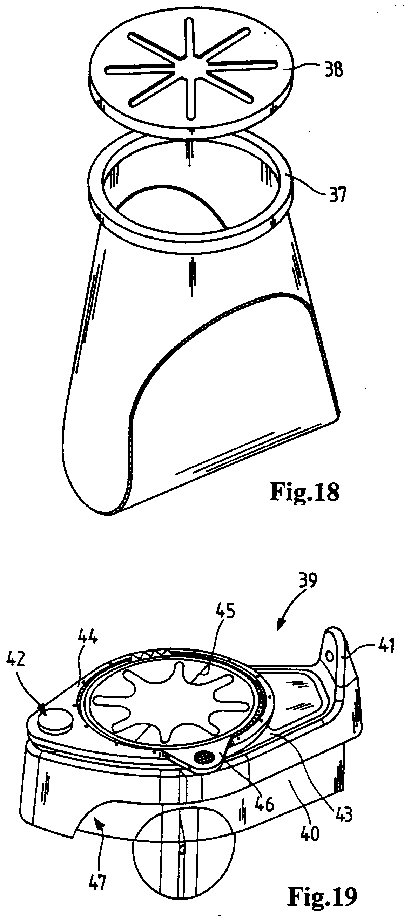

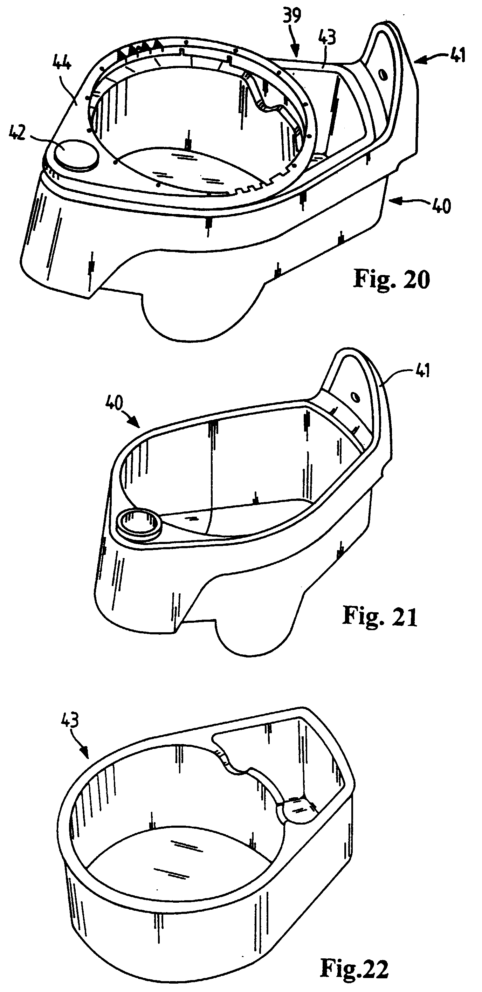

Ein Aufnahmegehäuse 3 nach Fig. 19 sowie in nahezu identischer Gestaltung nach den Fig. 20 bis 22 weist einen aus Kunststoff bestehenden Trägerrahmen 40 auf (Fig. 21), der mit einem einstückig angeformten Träger 41 versehen ist, der einschließlich entsprechender Stützabschnitte korrespondierend zu dem Träger 13 des Aufnahmeringes 11 nach den Fig. 2 sowie 16 und 17 gestaltet ist. Eine nähere Erläuterung erübrigt sich daher. Beim dargestellten Ausführungsbeispiel ist der Trägerrahmen 40 derart gestaltet, daß er mit seiner Unterseite an einem Bodenabschnitt der Haltekonsole oder eines Mitteltunnels des Fahrzeuginnenraumes aufsteht und dadurch eine zusätzliche Stützung erhält. In den Trägerrahmen 40 ist eine ebenfalls einstückig gestaltete Einsatzwanne 43 lösbar einsetzbar, die mit zwei Wannenabschnitten versehen ist. Der eine kreisförmige Wannenabschnitt ist insbesondere für die Aufnahme eines Bechers vorgesehen, wobei er einen gegenüber einem Becher oder einer Dose vergrößerten Durchmesser aufweist und so überschwappende Flüssigkeit aufnehmen kann. Parallel dazu ist der trapezartige Wannenabschnitt vorgesehen, der als einfacher Aufnahmebereich für Kleinteile dient. Der Trägerrahmen ist auf seiner dem Träger 41 gegenüberliegenden Seite ergänzend mit einer Aufnahme zur Halterung einer als Bolzen gestalteten Schwenkachse 42 versehen, an der ein Einsatzrahmen 44 schwenkbeweglich gelagert ist. Die Gestaltung der Schwenkachse 42 sowie die Gestaltung des Einsatzrahmens 44 entspricht den zuvor beschriebenen Ausführungsbiespielen, so daß für eine nähere Erläuterung auf diese Ausführungsbeispiele verwiesen wird. Durch die exzentrische Anordnung der Schwenkachse 42 relativ zur Einsatzwanne 43 und zwar insbesondere zu dem kreisförmigen Wannenabschnitt ist es möglich, den Einsatzrahmen so weit auszuschwenken, daß der Einsatzrahmen 44 die Einsatzwanne 43 nicht mehr überdeckt. Somit können gleichzeitig zwei Getränke gehaltert werden, indem insbesondere der Wannenabschnitt zur Aufnahme eines Bechers oder einer Dose und der Einsatzrahmen 44 zur Halterung einer Getränkeflasche dient. Um eine sichere Halterung der Getränkeflasche zu ermöglichen, ist in den Einsatzrahmen 44 gemäß Fig. 19 ein elastisch nachgiebiger Flascheneinsatz 45 einsetzbar, der von seiner grundsätzlichen Funktion her dem Bechereinsatz 36 nach Fig. 17 entspricht. Auch der Flascheneinsatz 45 weist somit elastisch nachgiebige und sternförmig angeordnete Laschen auf, die eine reibschlüssige Halterung der jeweiligen Getränkeflasche ermöglichen. Der Flascheneinsatz 45 ist mit einem nach außen abragenden Griffabschnitt 46 versehen, der ein erleichtertes Einsetzen oder Herausnehmen des Flascheneinsatzes 45 relativ zum Einsatzrahmen 44 ermöglicht.

## Patentansprüche

1. Haltekonsole für Komforteinheiten in einem Fahrzeuginnenraum, wobei wenigstens eine Komforteinheit zur Aufbewahrung von Tonträgern gestaltet ist,
**dadurch gekennzeichnet, daß**
eine fahrzeugfest montierbare, einstückige und eigensteife Trägerblende (4) vorgesehen ist, die ein Befestigungprofil (5) aufweist, das wenigstens drei in einer Reihe zueinander benachbarte, identische Zentrierköpfe (8) aufweist, und daß jede Komforteinheit mit einem Träger (13) versehen ist, der mit einer auf den Zentrierkopf (8) abgestimmten Zentrierpfanne sowie mit einem die Zentrierpfanne an dem Zentrierkopf (8) lösbar festlegenden Befestigungselement (14) versehen ist, und daß dem Zentrierkopf (8) und der Zentrierpfanne Stützmittel (9, 19, 26; 12) zur Abstützung des Trägers (13) zugeordnet sind.

2. Haltekonsole nach Anspruch 1,
**dadurch gekennzeichnet, daß**
die Trägerblende (4) in einem Cockpitbereich (1) des Fahrzeuginnenraumes derart angeordnet ist, daß das Befestigungsprofil (5) im wesentlichen vertikal ausgerichtet ist.

3. Haltekonsole nach Anspruch 1 oder 2,
**dadurch gekennzeichnet, daß**
daß als Stützmittel neben wenigstens einem Zentrierkopf (8) ein achsparallel zum Zentrierkopf (8) ausgerichteter Stütztrichter (9) in der Trägerblende (4) integriert ist und daß der Träger (13) mit einem in dem Stütztrichter (9) zentrierbaren Stützzapfen (19) versehen ist.

4. Haltekonsole nach einem der vorhergehenden Ansprüche,
**dadurch gekennzeichnet, daß**
ein mit verschiedenen Einsatzelementen (36, 37, 38) ausstattbarer Aufnahmering (11) mit dem Träger (13) einstückig verbunden ist.

5. Haltekonsole nach wenigstens einem der vorhergehenden Ansprüche,
**dadurch gekennzeichnet, daß**
der Träger (13) Teil eines Aufnahmegehäuses (10) für verschiedene Komforteinheiten ist, wobei die Komforteinheiten in Einsatzrahmen (17) des Aufnahmegehäuses (10) lösbar einsetzbare Gehäuseeinsätze (18, 30, 32, 34) aufweisen.

6. Haltekonsole nach Anspruch 5, dadurch gekennzeichnet, daß die Einsatzrahmen (17) im Aufnahmegehäuse (10) wenigstens zwischen einer aus dem Aufnahmegehäuse (10) herausragenden Funktionsposition und einer im Aufnahmegehäuse integrierten Ruheposition beweglich gelagert sind.

7. Haltekonsole nach einem der vorhergehenden Ansprüche,
**dadurch gekennzeichnet, daß**
die Einsatzrahmen (17) parallel zueinander in dem Aufnahmegehäuse (10) angeordnet sind und um eine gemeinsame Schwenkachse unabhängig voneinander schwenkbeweglich gelagert sind.

8. Haltekonsole nach wenigstens einem der vorhergehenden Ansprüche,
**dadurch gekennzeichnet, daß**
wenigstens zwei zueinander benachbarte Einsatzrahmen (17) identisch gestaltete Einsatzöffnungen aufweisen, und daß wenigstens ein Gehäuseinsatz (30, 34) mit einer sich über die wenigstens zwei Einsatzrahmen (17) erstreckenden Tiefe versehen ist.

9. Haltekonsole nach Anspruch 7,
**dadurch gekennzeichnet, daß**
die Schwenkachse mit wenigstens zwei Raststellungen (25) für die Einsatzrahmen (17) in der Funktionsposition und in der Ruheposition versehen ist.

10. Aufnahmegehäuse zur Anordnung in einem Fahrzeuginnenraum für Komforteinheiten zur, insbesondere Aufbewahrung von Tonträgern,
**dadurch gekennzeichnet, daß**
mehrere parallel zueinander angeordnete Einsatzrahmen (17) vorgesehen sind, die zwischen einer im Aufnahmegehäuse (10) versenkten Ruheposition und einer aus dem Aufnahmegehäuse (10) herausragenden Funktionsposition im Aufnahmegehäuse (10) beweglich gelagert sind, und die Einsatzöffnungen für die lösbare Aufnahme von Gehäuseeinsätzen (18, 30, 32, 34) der Komforteinheiten aufweisen.

11. Aufnahmegehäuse nach Anspruch 10,
**dadurch gekennzeichnet, daß**
die Gehäuseeinsätze (18, 20, 22, 24) derart auf die Einsatzöffnungen der Einsatzrahmen (17) abgestimmt sind, daß sie kraftschlüssig in die Einsatzrahmen (17) einsetzbar sind.

12. Aufnahmegehäuse nach Anspruch 10 oder 11,
**dadurch gekennzeichnet, daß**
die Einsatzrahmen (17) um eine gemeinsame Schwenkachse unabhängig voneinander schwenkbar gelagert sind.

13. Aufnahmegehäuse nach Anspruch 12,
**dadurch gekennzeichnet, daß**
die Schwenkachse gehäusefest positioniert ist und Raststellen (25) für die Funktionsposition und die Ruheposition der Einsatzrahmen (17) aufweist.

14. Aufnahmegehäuse nach einem der vorhergehenden Ansprüche,
**dadurch gekennzeichnet, daß**
wenigstens zwei zueinander benachbarte Einsatzrahmen (17) zueinander identische Einsatzöffnungen aufweisen, und daß wenigstens ein Gehäuseeinsatz (30, 34) wenigstens die doppelte Tiefe des Einsatzrahmens (17) aufweist.

15. Aufnahmegehäuse nach einem der Ansprüche 10 bis 14,
**dadurch gekennzeichnet, daß**
die Einsatzrahmen (17) kreisringförmig gestaltet sind und in Umfangsrichtung versetzte Rastprofilierungen für ein in Umfangsrichtung variables Einsetzen der korrespondierend profilierten Gehäuseeinsätze (18, 30, 32, 34) aufweisen.

16. Aufnahmegehäuse nach einem der Ansprüche 10 bis 15,
**dadurch gekennzeichnet, daß**
die Gehäuseeinsätze (18, 30, 32, 34) an ihrem Außenumfang mit Griffelementen (20, 21) versehen sind.

17. Aufnahmegehäuse nach einem der Ansprüche 10 bis 15,
**dadurch gekennzeichnet, daß**
jeder Gehäuseeinsatz (30a, 29a, 32a) zur Halterung eines Ton- oder Informationsträgers (52) wenigstens eine den Ton- oder Informationsträger (52) im eingesetzten Zustand formschlüssig übergreifende Führungsnase (49) aufweist.

18. Aufnahmegehäuse nach Anspruch 17,
**dadurch gekennzeichnet, daß**
die wenigstens eine Führungsnase (49) Teil eines in einem Seitenrand des Gehäuseeinsatzes (29a, 30a, 32a) vorgesehenen Aufnahmeschlitzes (48) ist, in den ein Randabschnitt des Ton- oder Informationsträgers (52) hineinragt.

19. Aufnahmegehäuse nach Anspruch 17 oder 18,
**dadurch gekennzeichnet, daß**
jeder Gehäuseeinsatz (29a, 30a, 32a) in einem der wenigstens einen Führungsnase (49) gegenüberliegenden Randbereich wenigstens ein den Ton- oder Informationsträger (52) unter die Führungsnase (49) drückendes Federelement (50, 51, 53) aufweist.

20. Aufnahmegehäuse für wenigstens eine Komforteinheit, insbesondere einen Getränkehalter, zur Anordnung in einem Fahrzeuginnenraum, insbesondere an einer Haltekonsole nach einem der Ansprüche 1 bis 9,
**dadurch gekennzeichnet, daß**
ein fahrzeugfest positionierbarer Trägerrahmen (40) vorgesehen ist, in den eine Einsatzwanne (43) lösbar einsetzbar ist, und an dem exzentrisch zur Einsatzwanne (43) eine Schwenkachse (42) für eine schwenkbewegliche Anordnung eines Einsatzrahmens (44) positioniert ist, der zur Aufnahme eines Komforteinsatzes (45) vorgesehen ist.

21. Aufnahmegehäuse nach Anspruch 20,
**dadurch gekennzeichnet, daß**
an dem Trägerrahmen (40) ein Träger (41) zur Festlegung des Trägerrahmens (40) an der Haltekonsole nach einem der Ansprüche 1 bis 9 vorgesehen ist.

22. Aufnahmegehäuse nach Anspruch 20 oder 21,
**dadurch gekennzeichnet, daß**
die Schwenkachse (42) auf der dem Träger (41) gegenüberliegenden Seite des Trägerrahmens (40) angeordnet ist.
